# NEW EUROPEAN PATENT SPECIFICATION

(11) **EP 2 426 035 B2**
(45) Date of publication and mention of the opposition decision: **27.01.2016**
(45) Mention of the grant of the patent: 17.04.2013
(21) Application number: 10174872.1
(22) Date of filing: 01.09.2010
(51) Int. Cl.: B62D 33/06

(54) **Cabin suspension of an agricultural vehicle**
Führerkabinenaufhängung eines landwirtschaftlichen Fahrzeugs
Suspension de cabine de véhicule agricole

(43) Date of publication of application: 07.03.2012
(73) Proprietor: CLAAS Tractor SAS, 78141 Velizy-Villacoublay (FR)
(72) Inventor: Belin, Cyrille, 78140, Vélízy-Villacoublay (FR); Carimantran, Francois, 78280, Guyancourt (FR)
(74) Representative: Belda, Stefan Johannes

(56) References cited:
- EP-A1- 0 426 510
- WO-A1-2008/051139
- WO-A2-2009/084856
- WO-A2-2010/001204
- DE-A1- 19 547 009
- US-A1- 2007 267 894

## Description

The invention relates to a cabin suspension of an agricultural vehicle according to the preamble of claim 1.

Driver's cabins of agricultural vehicles, such as for example tractors or self-propelled harvesting machines have for years been spring mounted with respect to the vehicle frame. This measure considerably increases travelling comfort for the vehicle operator, in particular when the vehicle is driven over uneven ground.

Agricultural vehicles are generally built on a rigid machine frame, on which a chassis is fastened. When driving over farm land, owing to unevenness in the ground, but also owing to vibrations conditional upon operation (e.g. engine vibrations, operational vibrations of working units etc.), the frame is set into movements of various kinds. These include rolling and pitching movements, which involve a rotation of the machine frame about the longitudinal axis of the vehicle (rolling) or about the transverse axis of the vehicle (pitching). In addition, particularly when driving through unevenness on the ground, movements of the machine frame can take place in vertical or lateral directions. The movements can also occur when travelling on roads, but they are generally less in this case.

In order to expose the vehicle operator as little as possible to these generally intrusive movements, a driver's cabin accommodating the vehicle driver is, as is known, spring supported by the machine frame, so that movements of the machine frame are at least partially absorbed, which increases travelling comfort.

A design for a cabin suspension of a tractor is described in EP 0 426 510 B1. Four elastically deformable elements are arranged acting between the cabin and the machine frame. A rear pair of these elements is connected with the rear cabin base by a rear transverse strut. Two front elements are respectively connected by means of holding elements with the front cabin base, wherein the holding elements are additionally articulated to a rear transverse carrier, fixed to the frame, via longitudinal struts running toward the back in the longitudinal direction of the vehicle.

The holding element of the front right elastically deformable element, viewed in the direction of travel of the vehicle, is, as can be seen in Fig. 4 of EP 0 426 510 B1, articulately connected with an end of a connecting strut, which extends approximately over the width of the frame, transversely to the longitudinal direction of the vehicle. The opposite end of this connecting strut is articulately connected with a transverse carrier which is fixed to the vehicle.

The described cabin suspension is suitable inter alia for damping of pitching movements. With a pitching movement of the cabin (toward the front), the front elastically deformable elements deflect elastically, wherein owing to their damping characteristic, this pitching movement is damped.

However, it is regarded as disadvantage that with pitching movements, the front cabin region is deflected laterally - in relation to the longitudinal direction of the vehicle. The lateral deflection occurs because the connecting strut connecting the cabin with the front transverse carrier keeps a fixed distance between its articulation points on the cabin and a fixed transverse carrier. This lateral deflection of the front cabin region with pitching movements is felt to be intrusive by the vehicle operator. With a connecting strut which is constructed to be shorter, due to less design space, the lateral displacement even intensifies, because the connecting strut is then turned in a larger angle at a same deformation of the elastic spring elements.

It is therefore the object of the present invention to provide a cabin suspension of the type indicated above, which offers the vehicle operator an increased comfort.

According to the invention, this is achieved by a cabin suspension according to claim 1, according to which, with a cabin suspension of the type indicated above, the connecting element is changeable in length, in order to at least reduce a deflection of the driver's cabin transversely to the deformation direction of the elastic element on deformation of the elastically deformable element. Ideally, a transverse deflection is even completely prevented by the change in length.

According to the invention, it has been identified that with a cabin suspension of the type in question, an elastic deformation of the front elastically deformable elements causes a lateral deflection of the front cabin region. This effect, identified as a disadvantage, has been eliminated according to the invention by a mechanical decoupling. Thus, instead of a rigid connecting element, the inventive cabin suspension is provided with a connecting element which is changeable in length. The longitudinal adapting provides that the driver's cabin, on elastic deformation contrary to the restoring force of the elastically deformable element, is not deflected or is at least deflected less intensively, in the transverse direction. The travel comfort is thereby increased, because the elastic deformation can take place without transverse displacement of the cabin.

Structurally, the longitudinal adaptability of the connecting element can be realized in different ways. Advantageously, the connecting element is a vibration damper. The connecting element can therefore be changed in its length, but changes in length take place in a controlled manner, owing to the damping, which contributes to the stability of the mounting.

According to an advantageous development of the invention, the connecting element comprises a spring-damper arrangement. The connecting element is thereby elastically deformable in its length, wherein the deformation and resilience takes place in a damped manner.

For adaptation to different requirements, the damping characteristic of the vibration damper can generally be changeable. With the use of a hydraulic damper, this can take place for example by changing the viscosity of the damping medium.

Another advantageous development of the invention provides that the damping characteristic of the vibration damper can be changed as a function of one or more operating parameters of the vehicle. For example, it would be conceivable, as a function of the speed of travel, the steering angle, the slope of the ground, engine rotation speed, trailing load, gear selection, payload etc., to set a damping characteristic in order to obtain a suitable reaction behaviour of the connecting element in the respective situation. Of course, a setting as a function of other components of the cabin suspension itself is also conceivable.

To increase the comfort, provision can additionally be made that at least one sensor is associated with the vehicle and/or with the cabin, which sensor detects an operating parameter of the vehicle, wherein a control arrangement is provided, which changes the damping characteristic of the vibration damper depending on the detected operating parameter.

Structurally, the connecting element may extend in a plane lying transversely to the longitudinal axis of the vehicle. The longitudinal extension of the connecting element is therefore substantially transverse to the longitudinal axis of the vehicle, so that with pitching movements of the driver's cabin, lateral deflections of the driver's cabin can be reduced or can even be prevented entirely.

One end of the connecting element is pivotally connected with the driver's cabin and another end of the connecting element is pivotally connected with the frame. For this, the connecting element can be constructed approximately in a rod shape and can have two ends

In practice, the frame of agricultural vehicles mostly has two longitudinal carriers extending in parallel in the longitudinal direction of the vehicle. The connecting element is connected by its end on the frame side with a front transverse carrier, which spans two such longitudinal carriers of the frame.

The stability of the cabin suspension can be increased, with the suspension comfort being maintained, by having several longitudinal struts extending in the longitudinal direction of the vehicle, one end of which respectively is pivotally connected with the frame and another end of which is pivotally connected with the cabin.

When using an embodiment of the frame with at least two longitudinal carriers, the longitudinal struts of the cabin suspension could advantageously be fastened on a rear transverse carrier, which spans the longitudinal carriers of the frame.

The invention is realisable if one elastically deformable element acts between the driver's cabin and the frame. However, according to an advantageous further development, a plurality of elastically deformable elements is arranged between the driver's cabin and the machine frame, a first number of which is associated with a front region of the driver's cabin, and a second number of which is associated with a rear region. A use of several elastically deformable elements offers the possibility of supporting individual regions of the driver's cabin individually, that is with individual suspension characteristics.

Expediently, the front elastically deformable elements carry both the driver's cabin and also the longitudinal struts, whereas the rear elastically deformable elements only carry the driver's cabin.

It is noted that the cabin suspension according to the invention is described below by way of example for a tractor. However, the invention is applicable accordingly to other agricultural vehicles, such as for example self-propelled machines (combines, forage harvesters or suchlike).

The invention is explained in further detail below with reference to the enclosed figures. Further details and advantages of the invention will also be seen therefrom, in which:
- Fig. 1: shows a diagrammatic illustration of a cabin suspension known from prior art, in two states,
- Fig. 2: shows a diagrammatic illustration of a cabin suspension according to the invention, in two states,
- Fig. 3: shows a diagrammatic illustration of a connecting element of a cabin suspension according to the invention,
- Fig. 4: shows a diagrammatic side view of a tractor,
- Fig. 5: shows a perspective view of an exemplary embodiment of a cabin suspension according to the invention.

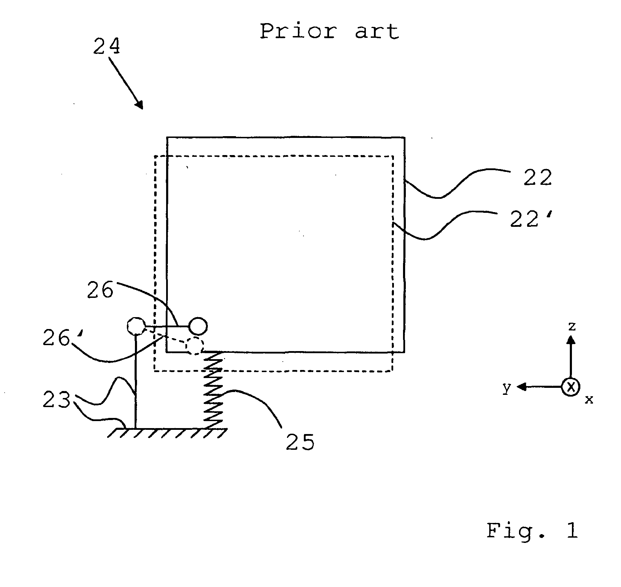

Fig. 1 shows a cabin suspension 24, known from prior art, in diagrammatic illustration in the original state (solid lines) and in a deflected state (dashed lines). A driver's cabin 22 of an agricultural vehicle is movably supported on a frame 23 of the vehicle. For this, the driver's cabin 22 is connected with the frame 23 by means of a connecting element 26. The connecting element 26 is a rod-shaped component, the opposite ends of which are articulately connected with the frame 23 and with the driver's cabin 22 respectively.

In order to compensate for vibrations of the frame 23, which are transferred to the frame 23 via the chassis, for example when travelling over unevenness in the ground, an elastically deformable element 25, for instance a spring, is arranged between the cabin 22 and the frame 23.

The connecting element 26 is aligned approximately transversely in relation to a preferred deformation direction of the elastically deformable element 25, so that the driver's cabin 22 can move in a relative manner with respect to the frame 23 contrary to the restoring force of the elastically deformable element 25.

A state occurring under application of force (cabin 22 is pressed against the frame 23 contrary to the indicated z-direction) is illustrated in dashed lines. In this case, the driver's cabin 26' is staggered with respect to the original position of the driver's cabin 26 contrary to the z-direction. Owing to the guidance by the connecting element 26', the driver's cabin 22' in the deflected state is, however, not only staggered contrary to the z-direction, but is also staggered laterally, in y-direction, with respect to the original position of the driver's cabin 26. This additional lateral movement in the y-direction, occurring on deflection, is generally perceived intrusive by a vehicle operator working in the driver's cabin. The deformed elastic element is not illustrated in Fig. 1.

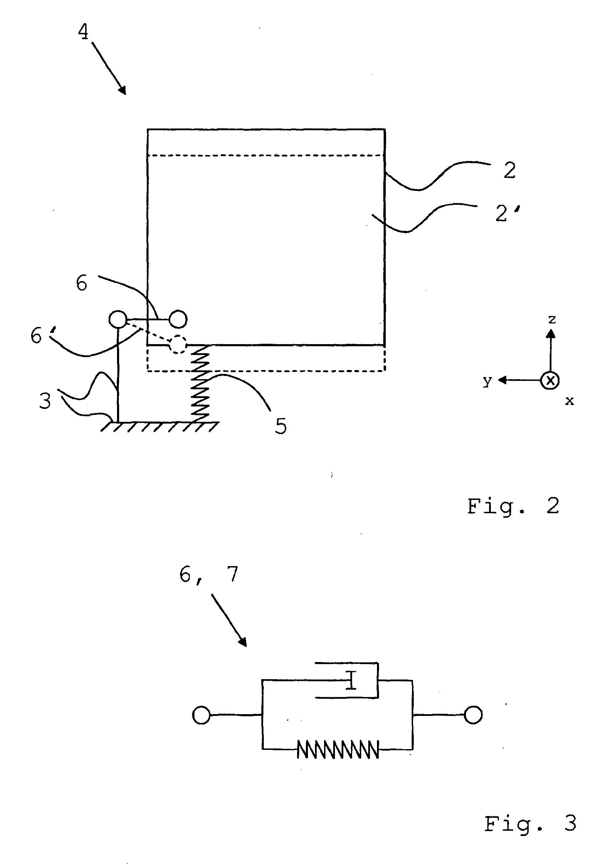

In contrast, Fig. 2 shows a cabin suspension 4 according to the invention in diagrammatic illustration in the original state (solid lines) and in the deflected state (drawn in dashed lines). A driver's cabin 2 of an agricultural vehicle is again supported on a frame 3 of a vehicle. For this, the driver's cabin 2 is connected with the frame 3 by means of a connecting element 6 in a similar manner to that according to Fig. 1. However, according to the invention, the connecting element 6 is designed as to be changeable in length.

Owing to the design of the connecting element 6 being changeable in length, a deflection of the driver's cabin 2 contrary to the indicated z-direction into a deflected position of the driver's cabin 2' is possible, without the driver's cabin 2' being deflected in the y-direction with respect to the original position. This is achieved by the connecting element 6' in the deflected state of the driver's cabin 2 having a greater length than the connecting element 6 in the non-deflected state. The lateral displacement of the driver's cabin 2 in the y-direction, which was perceived to be intrusive, is thereby eliminated.

Fig. 3 shows diagrammatically a possible structure of a connecting element 6, which can be used with a cabin suspension 4 according to the invention. Accordingly, the connecting element 6 is constructed approximately in a rod shape with articulation points on both sides and comprises a spring-damper arrangement 7. Such an embodiment makes possible a longitudinal adaptability of the connecting element 6. In addition, due to its damping characteristics, a higher stability of the mounting is achieved than with an only spring-mounted embodiment of the connecting element 6.

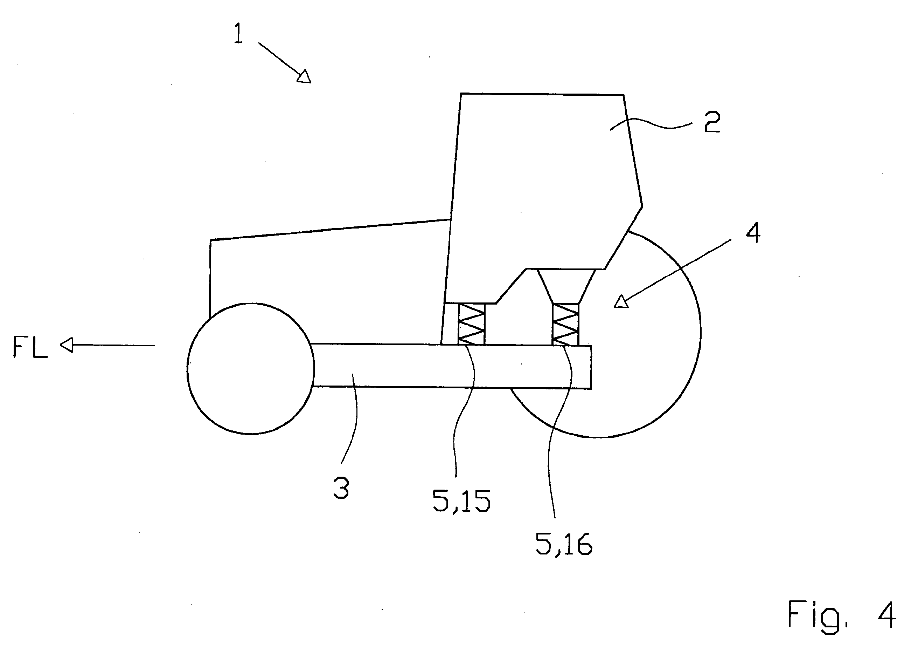

Fig. 4 is a diagrammatic side view of a tractor 1 representing an exemplary agricultural vehicle for use of the inventive cabin suspension. The shown tractor 1 has front and rear wheels (not designated), connected with a frame 3. A driver's cabin 2 is supported on the frame 3. For this, a cabin suspension 4 is provided, which has a plurality of elastically deformable elements 5. The elastically deformable elements 5 are preferably embodied as spring-damper elements, front ones 15 of which are arranged under the front region of the driver's cabin 2, and rear ones 16 of which are arranged under the rear region of the driver's cabin 2.

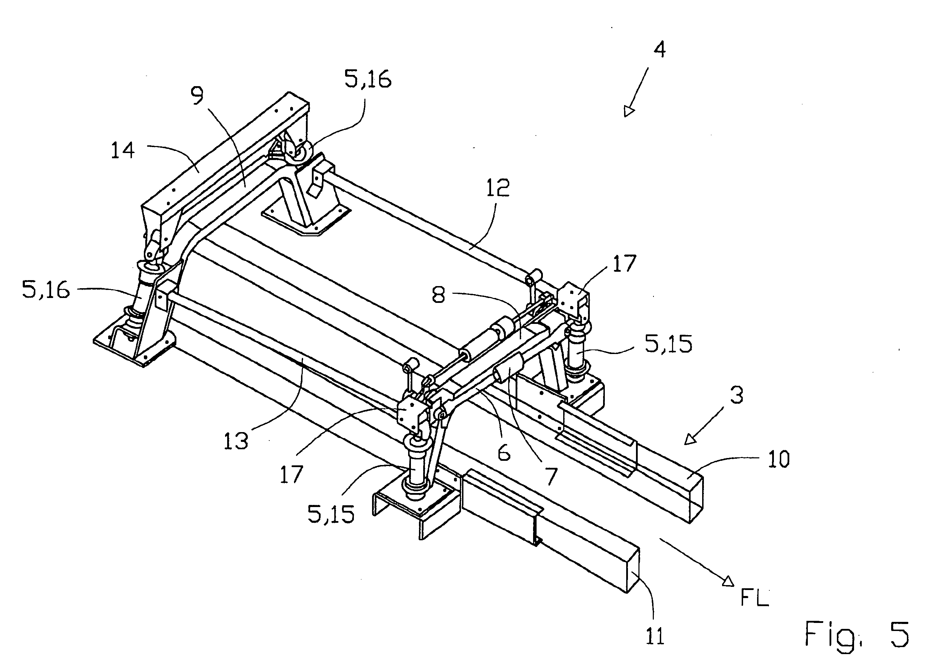

Further details of a cabin suspension 4 according to the invention are explained in context of Fig. 5, which provides a perspective view of an exemplary embodiment of a cabin suspension 4 according to the invention. Fig. 5 shows a cabin suspension 4 of a tractor, with the driver's cabin missing, in order to make clear the kinematic structure essential to the invention. The cabin suspension 4 shown in Fig. 5 could be used for example in a tractor 1 as shown in Fig. 4.

In Fig. 5, two longitudinal carriers 10, 11, running parallel to the longitudinal direction FL of a tractor, form a part of the vehicle frame 3. The longitudinal carriers 10, 11 are spanned by a rear transverse carrier 9 and by a front transverse carrier 8, which are arranged approximately under a rear and a front region of a driver's cabin (not shown) respectively. The transverse carriers 8, 9 are fastened on, and a thus part of, the vehicle frame 3.

At the feet of the front and rear transverse carriers 8, 9, a total of four elastically deformable elements 5, 15, 16 are arranged, which are embodied as spring-damper elements. The articulation points of the rear two spring-damper elements 16 on the cabin side are connected with each other via a rear transverse strut 14, on which a rear region of the driver's cabin (not shown) is fastened.

The articulation points of the front two spring-damper elements 15 on the cabin side are respectively connected with holding elements 17, on which a front region of the driver's cabin (not shown) is fastened. For stabilizing, longitudinal struts 12, 13 are provided, running on both sides, the rear ends of which longitudinal struts 12, 13 are articulated on the rear transverse carrier 9, and the front ends of which are articulated on the holding elements 17 respectively.

As seen in Fig. 5, the cabin suspension 4 further comprises an approximately rod-shaped connecting element 6 extending in a plane lying transversely to a longitudinal direction FL of the vehicle. A first end of connecting element 6 on the frame side is rotatable mounted on the left side (related to the longitudinal direction FL of the vehicle) of front transverse carrier 8. The connecting element 6 runs approximately parallel to the upper region of front transverse carrier 8 and thus runs transversely over the width of the frame 3 to be rotatable mounted with its second end on the cabin side on the right (related to the longitudinal direction FL of the vehicle) holding element 17. According to the invention, connecting element 6 is changeable in length. For this purpose, connecting element 6 comprises a spring-damper arrangement 7, as indicated.

The operation of cabin suspension 4 is as follows. The elastically deformable elements 5 enable that, in addition to the damping of rolling movements (rotation about a longitudinal axis of the vehicle), pitching movements of the cabin are damped. With an inclination of the driver's cabin towards the front, the front spring-damper elements 15 are being compressed, i.e. deformed elastically. Accordingly, the holding elements 17 move downwards. While downward movement, the connecting element 6 adapts itself in length in order to adapt to an altered distance between its articulation points on the front transverse carrier 8 and the right holding element 17, which distance alters by the downward movement. Owing to the adaptation in length of the connecting element 6, the front region of the driver's cabin is not deflected laterally on elastic deformation of the spring-damper elements 15. This distinctly increases the comfort for a vehicle operator. The same advantageous effect occurs on upward movement of the front region of the cabin.

### List of reference numbers

- 1: tractor
- 2: driver's cabin
- 3: frame
- 4: cabin suspension
- 5: elastically deformable element
- 6: connecting element
- 7: spring-damper arrangement
- 8: front transverse carrier
- 9: rear transverse carrier
- 10: left longitudinal carrier
- 11: right longitudinal carrier
- 12: left longitudinal strut
- 13: right longitudinal strut
- 14: rear transverse strut
- 15: front spring-damper element
- 16: rear spring-damper element
- 17: holding element
- 22: driver's cabin
- 23: frame
- 24: cabin suspension
- 25: elastically deformable element
- 26: connecting element
- FL: longitudinal direction of the vehicle

## Claims

1. Cabin suspension (4) of an agricultural vehicle (1), comprising a driver's cabin (2) supported by a frame (3) of the vehicle (1), the cabin (2) being movably connected with the frame (3) by means of at least one connecting element (6), wherein at least one elastically deformable element (5, 15, 16) acts between the cabin (2) and the frame (3), and wherein the connecting element (6) extends substantially transversely to a deformation direction of the elastically deformable element (5, 15, 16),
**characterized in that** several longitudinal struts (12, 13) are provided, extending in the longitudinal direction of the vehicle (FL), respectively one end of which is pivotally connected with the frame wand another end of which is pivotally connected with the cabin (2), wherein the connecting element (6) is fastened by its end facing the frame (3) on a front transverse carrier (8), which spans two longitudinal carriers (10, 11) of the frame (3), and wherein the connecting element (6) is changeable in length, in order to at least reduce a deflection of the cabin (2) transversely to the deformation direction on deformation of the elastically deformable element (5, 15, 16).

2. Cabin suspension according to claim 1, **characterized in that** the connecting element (6) is a vibration damper.

3. Cabin suspension according to claim 1 or 2, **characterized in that** the connecting element (6) comprises a spring-damper arrangement (7).

4. Cabin suspension according to claim 2 or 3, **characterized in that** the damping characteristic of the vibration damper (6, 7) is changeable.

5. Cabin suspension according to one of claims 2 to 4, **characterized in that** the damping characteristic of the vibration damper (6, 7) is changeable as a function of one or more operating parameters of the vehicle (1).

6. Cabin suspension according to one of claims 2 to 5, **characterized in that** at least one sensor is associated with the vehicle and/or with the cabin, which detects an operating parameter of the vehicle, wherein a control arrangement is provided, which changes the damping characteristic of the vibration damper depending on the detected operating parameter.

7. Cabin suspension according to one of claims 1 to 6, **characterized in that** the connecting element (6) extends in a plane lying transversely to the longitudinal axis of the vehicle (1).

8. Cabin suspension according to one of claims 1 to 7, **characterized in that** one end of the connecting element (6) is pivotally connected with the cabin (2) and another end of the connecting element (6) is pivotally connected with the frame (3).

9. Cabin suspension according to one of claims 1 to 8, **characterized in that** the longitudinal struts (12, 13) are fastened on a rear transverse carrier (9), which spans two longitudinal carriers (10, 11) of the frame (3).

10. Cabin suspension according to one of claims 1 to 9, **characterized in that** between the cabin (2) and the frame (3) a plurality of elastically deformable elements (5, 15, 16) is arranged, a first number (15) of which is associated with a front region of the cabin (2) and a second number (16) of which is associated with a rear region of the cabin (2).

11. Cabin suspension according to claim 10, **characterized in that** the rear elastically deformable elements (16) carry the cabin (2) and the front elastically deformable elements (15) carry both the cabin (2) and the longitudinal struts (12, 13).

## Patentansprüche

1. Kabinenaufhängung (4) eines landwirtschaftlichen Fahrzeugs (1), das eine Fahrerkabine (2) umfasst, die von einem Rahmen (3) des Fahrzeugs (1) getragen wird, wobei die Kabine (2) bewegbar mit dem Rahmen (3) mittels mindestens eines Verbindungselements (6) verbunden ist, wobei mindestens ein elastisch verformbares Element (5, 15, 16) zwischen der Kabine (2) und dem Rahmen (3) wirkt, und wobei sich das Verbindungselement (6) im Wesentlichen quer zu einer Verformungsrichtung des elastisch verformbaren Elements (5, 15, 16) erstreckt,
**dadurch gekennzeichnet, dass** mehrere Längsstreben (12, 13) vorgesehen sind, die sich in die Längsrichtung des Fahrzeugs (FL) erstrecken, von welchen jeweils ein Ende schwenkend dem Rahmen (3) verbunden ist, und ein anderes Ende schwenkend mit der Kabine (2) verbunden ist, wobei das Verbindungselement (6) an seinem Ende, das zu dem Rahmen (3) zeigt, auf einem Vorderquerträger (8), der zwei Längsträger (10, 11) des Rahmens (3) überspannt, befestigt ist, und wobei das Verbindungselement (6) in der Länge veränderbar ist, um mindestens eine Ablenkung der Kabine (2) quer zu der Verformungsrichtung beim Verformen des elastisch verformbaren Elements (5, 15, 16) zu verringern.

2. Kabinenaufhängung nach Anspruch 1, **dadurch gekennzeichnet, dass** das Verbindungselement (6) ein Schwingungsdämpfer ist.

3. Kabinenaufhängung nach Anspruch 1 oder 2, **dadurch gekennzeichnet, dass** das Verbindungselement (6) eine Federdämpferanordnung (7) umfasst.

4. Kabinenaufhängung nach Anspruch 2 oder 3, **dadurch gekennzeichnet, dass** das Dämpfmerkmal des Schwingungsdämpfers (6, 7) veränderbar ist.

5. Kabinenaufhängung nach einem der Ansprüche 2 bis 4, **dadurch gekennzeichnet, dass** das Dämpfmerkmal des Schwingungsdämpfers (6, 7) in Abhängigkeit von einem oder mehreren Betriebsparametern des Fahrzeugs (1) veränderbar ist.

6. Kabinenaufhängung nach einem der Ansprüche 2 bis 5, **dadurch gekennzeichnet, dass** mindestens ein Sensor mit dem Fahrzeug und/oder mit der Kabine assoziiert ist, der einen Betriebsparameter des Fahrzeugs erfasst, wobei eine Steuereinrichtung vorgesehen ist, die das Dämpfmerkmal des Schwingungsdämpfers in Abhängigkeit von dem erfassten Betriebsparameter ändert.

7. Kabinenaufhängung nach einem der Ansprüche 1 bis 6, **dadurch gekennzeichnet, dass** sich das Verbindungselement (6) in einer Ebene erstreckt, die quer zu der Längsachse des Fahrzeugs (1) liegt.

8. Kabinenaufhängung nach einem der Ansprüche 1 bis 7, **dadurch gekennzeichnet, dass** ein Ende des Verbindungselements (6) schwenkend mit der Kabine (2) verbunden ist, und ein anderes Ende des Verbindungselements (6) schwenkend mit dem Rahmen (3) verbunden ist.

9. Kabinenaufhängung nach einem der Ansprüche 1 bis 8, **dadurch gekennzeichnet, dass** die Längsstreben (12, 13) auf einem hinteren Querträger (9), der zwei Längsträger (10, 11) des Rahmens (3) überspannt, befestigt sind.

10. Kabinenaufhängung nach einem der Ansprüche 1 bis 9, **dadurch gekennzeichnet, dass** zwischen der Kabine (2) und dem Rahmen (3) eine Mehrzahl elastisch verformbarer Elemente (5, 15, 16) eingerichtet ist, von welchen eine erste Anzahl (15) mit einem Vorderbereich der Kabine (2) assoziiert ist, und eine zweite Anzahl (16) mit einem hinteren Bereich der Kabine (2) assoziiert ist.

11. Kabinenaufhängung nach Anspruch 10, **dadurch gekennzeichnet, dass** die hinteren elastisch verformbaren Elemente (16) die Kabine (2) tragen, und die vorderen elastisch verformbaren Elemente (15) sowohl die Kabine (2) als auch die Längsstreben (12, 13) tragen.

## Revendications

1. Suspension de cabine (4) d'un véhicule agricole (1), comprenant une cabine de conduite (2) soutenue par un châssis (3) du véhicule (1), la cabine (2) étant reliée de manière mobile au châssis (3) au moyen d'au moins un élément de liaison (6), au moins un élément déformable élastiquement (5, 15, 16) agissant entre la cabine (2) et le châssis (3), et l'élément de liaison (6) s'étendant sensiblement transversalement à une direction de déformation de l'élément déformable élastiquement (5, 15, 16), **caractérisée en ce qu'**il est prévu plusieurs entretoises (12, 13) qui s'étendent dans la direction longitudinale du véhicule (FL) et dont, à chaque fois, une extrémité est reliée de manière pivotante au châssis (3) et une autre extrémité est reliée de manière pivotante à la cabine (2), l'élément de liaison (6) étant fixé, par son extrémité tournée vers le châssis (3), à un support transversal avant (8) qui s'étend sur deux supports longitudinaux (10, 11) du châssis (3), et l'élément de liaison (6) étant variable en longueur pour au moins réduire une déviation de la cabine (2) transversalement à la direction de déformation lors de la déformation de l'élément déformable élastiquement (5, 15, 16).

2. Suspension de cabine selon la revendication 1, **caractérisée en ce que** l'élément de liaison (6) est un amortisseur de vibrations.

3. Suspension de cabine selon la revendication 1 ou 2, **caractérisée en ce que** l'élément de liaison (6) comprend un dispositif à ressort et amortisseur (7).

4. Suspension de cabine selon la revendication 2 ou 3, **caractérisée en ce que** la caractéristique d'amortissement de l'amortisseur de vibrations (6, 7) est variable.

5. Suspension de cabine selon une des revendications 2 à 4, **caractérisée en ce que** la caractéristique d'amortissement de l'amortisseur de vibrations (6, 7) est variable en fonction d'un ou plusieurs paramètres de fonctionnement du véhicule (1).

6. Suspension de cabine selon une des revendications 2 à 5, **caractérisée en ce qu'**au moins un capteur est associé au véhicule et/ou à la cabine, lequel détecte un paramètre de fonctionnement du véhicule, un dispositif de commande étant prévu, qui fait varier la caractéristique d'amortissement de l'amortisseur de vibrations en fonction du paramètre de fonctionnement détecté.

7. Suspension de cabine selon une des revendications 1 à 6, **caractérisée en ce que** l'élément de liaison (6) s'étend dans un plan situé transversalement à l'axe longitudinal du véhicule (1).

8. Suspension de cabine selon une des revendications 1 à 7, **caractérisée en ce qu'**une extrémité de l'élément de liaison (6) est reliée de manière pivotante à la cabine (2) et une autre extrémité de l'élément de liaison (6) est reliée de manière pivotante au châssis (3).

9. Suspension de cabine selon l'une des revendications 1 à 8, **caractérisée en ce que** les entretoises longitudinales (12, 13) sont fixées à un support transversal arrière (9) qui s'étend sur deux supports longitudinaux (10, 11) du châssis (3).

10. Suspension de cabine selon une des revendications 1 à 9, **caractérisée en ce qu'**une pluralité d'éléments déformables élastiquement (5, 15, 16) est disposée entre la cabine (2) et le châssis (3), dont un premier nombre (15) est associé à une zone avant de la cabine (2) et un deuxième nombre (16) est associé à une zone arrière de la cabine (2).

11. Suspension de cabine selon la revendication 10, **caractérisée en ce que** les éléments déformables élastiquement arrière (16) supportent la cabine (2), et les éléments déformables élastiquement avant (15) supportent à la fois la cabine (2) et les entretoises longitudinales (12, 13).
